# EUROPÄISCHE PATENTSCHRIFT

(11) **EP 2 858 741 B1**
(45) Veröffentlichungstag und Bekanntmachung des Hinweises auf die Patenterteilung: **24.07.2019**
(21) Anmeldenummer: 13725697.0
(22) Anmeldetag: 29.05.2013
(51) Int. Cl.: B01F 3/04, B01F 15/00, B01F 15/04, G05D 11/13, B29B 7/74

(54) **AUFSCHÄUMVERFAHREN**
FOAMING METHOD
PROCÉDÉ DE MOUSSAGE

(30) Priorität: 06.06.2012 DE 102012209517
(43) Veröffentlichungstag der Anmeldung: 15.04.2015
(73) Patentinhaber: Henkel AG & Co. KGaA, 40589 Düsseldorf (DE)
(72) Erfinder: ERBAN, Jens, 47533 Kleve (DE)
(86) Internationale Anmeldenummer: PCT/EP2013/061094
(87) Internationale Veröffentlichungsnummer: WO 2013/182467

(56) Entgegenhaltungen:
- EP-A2- 0 723 816
- WO-A1-02/26459
- DE-A1- 2 628 785
- GB-A- 306 550
- US-A1- 2008 105 317
- US-A1- 2009 236 025

## Beschreibung

Die vorliegende Erfindung betrifft ein Verfahren zum Aufschäumen von Klebstoffen.

Vorrichtungen sind im Stand der Technik lange bekannt und werden beispielsweise zum Aufschäumen von Schmelzklebstoff in der Verpackungsindustrie eingesetzt.

Beispielsweise zeigt die DE 19905229 A1 eine Vorrichtung zum Aufschäumen eines flüssigen Klebers mit einer als dynamischen Mixkopf ausgebildeten Aufschäumeinheit, in die über ein Leitungssystem Druckluft injiziert wird.

Die WO02/26459A1 wiederum offenbart ein Verfahren zur kontinuierlichen Herstellung von Stoff- und Reaktionsgemischen. In der ebenfalls beschrieben Vorrichtung zur Durchführung des Verfahrens kommt zu Homogenisierung zweier Stoffe eine Mischvorrichtung zum Einsatz.

Regelmäßig sind die Vorrichtungen im Stand der Technik auf einen bestimmten Klebstoff festgelegt. Ein eingesetzter Klebstoff weist dabei in der Regel eine bestimmte auf einen spezifischen Einsatzzweck zugeschnittene oder auf ein Substrat mit bestimmten Parametern angepasste Qualität auf. Wird eine andere Klebstoffqualität benötigt, so muss auch der in der Vorrichtung bevorratete Klebstoff ausgetauscht werden, was einen Zusatzaufwand bedeuten kann.

Aufgabe der vorliegenden Erfindung ist es daher, ein verbessertes Aufschäumverfahren bereitzustellen.

Diese Aufgabe wird durch die Merkmale des Hauptanspruchs gelöst.

Vorteilhafte Weiterbildungen der Erfindung finden sich in den Unteransprüchen,
Grundgedanke der Erfindung ist der Einsatz einer Aufschäumvorrichtung aufweisend eine Aufschäumeinheit mit einer Aufschäumkammer mit mechanischen Aufschäummitteln, die einen Rotor und einen Stator aufweisen, mit denen zumindest drei der Aufschäumkammer zugeführte Komponenten mischbar sind, wobei als Komponenten zumindest ein Klebstoff, ein gasförmiges Aufschäummedium und ein fließfähiges Verdünnungsmittel zur Ausgabe eines Klebstoffschaums zur Anwendung kommen, wobei Stellmittel vorgesehen sind, um das Verhältnis der einzelnen Komponenten zueinander zur Beeinflussung der Eigenschaften des Klebstoffschaums einzustellen.

Zum Einsatz kommende Aufschäumeinheiten sind im Stand der Technik bekannt. Beispielsweise kommt eine Aufschäumeinheit zum Einsatz, bei der eine äußere, hohlzylindrische und einseitig offene Hülse bereichsweise einen Hohlraum, die Aufschäumkammer umschließt, wobei von der Innenwand der Hülse radial nach innen vorstehende Stifte, die einen Stator bilden. Zudem ragt durch die einseitige Öffnung der Hülse ein drehbarer Zylinder in die Aufschäumkammer hinein, wobei an der Mantelfläche des Zylinders radial nach außen vorstehende Stifte vorgesehen sind, die einen Rotor bilden. Stator und Rotor bilden dabei die Aufschäummittel. Dabei sind Rotor und Stator derart gestaltet und zueinander angeordnet, dass umfänglich über den Mantel verlaufende Reihen von Stiften des Rotors zwischen umfänglich über die Innenwand der Hülse verlaufende Reihen von Stiften des Stators angeordnet sind.

Die Aufschäumeinheit vermag, beispielsweise in der oben beschriebenen Bauform, mit Hilfe der mechanischen Aufschäummittel den der Aufschäumkammer zugeführten Klebstoff und das der Aufschäumkammer zugeführte gasförmige Aufschäummedium zu einem Klebstoffschaum aufzuschäumen. Selbstverständlich ist es zudem denkbar, Klebstoff und gasförmiges Aufschäummedium vor dem Zuführen in die Aufschäumkammer zu vermischen.

Die vorliegende Erfindung sieht zudem die Zuführung einer weiteren Komponente, nämlich eines fließfähigen Verdünnungsmittels in die Aufschäumkammer vor. Selbiges dient vorzugsweise zur Beeinflussung der Eigenschaften des Klebstoffschaums. Denkbar ist auch hier eine gesonderte Zuführung in die Aufschäumkammer, wohl aber auch eine Vermischung von Klebstoff und/oder gasförmiges Aufschäummedium mit dem fließfähigen Verdünnungsmittel vor dem Zuführen in. die Aufschäumkammer.

Weiter sieht die Erfindung den Einsatz von Stellmitteln vor, um das Verhältnis der einzelnen Komponenten zueinander zur Beeinflussung der Eigenschaften des Klebstoffschaums einzustellen. Bevorzugt ist dabei die der Aufschäumkammer zugeführte Menge an fließfähigem Verdünnungsmittel über ein besagtes Stellmittel einzustellen.

Durch die Zugabe des fließfähigen Verdünnungsmittels in die Aufschäumkammer, kann die Qualität des eingesetzten Klebstoffes auf die wirklich notwendigen Qualitäten für die Verklebung angepasst werden. So kann beispielsweise die Anfangsklebrigkeit, die offene Zeit oder andere Eigenschaften des Klebstoffes durch Einsatz einer größeren Menge an fließfähigem Verdünnungsmittel beeinflusst werden. So kann die Aufschäumvorrichtung beispielsweise mit einem hochwertigen Klebstoff ausgerüstet und gefahren werden, der für Verklebungen mit geringeren Klebeanforderungen mittels des fließfähigen Verdünnungsmittels so weit verdünnt wird, dass einerseits eine ausreichende Verklebung ermöglicht, andererseits aufgrund der Verdünnung Klebstoff eingespart werden kann. So kann aufgrund des fließfähigen Verdünnungsmittels ein Austausch des eingesetzten Klebstoffes umgangen werden.

Gleichwohl ist es alternativ oder zusätzlich denkbar, als Verdünnungsmittel ein Additiv oder Zusatzstoff für den Klebstoff einzusetzen, der die Eigenschaften nicht herabsetzt, sondern selbige positiv beeinflusst und den Klebstoff höherwertiger werden lässt. Demnach kann also auch ein vorzugsweise kostengünstiger Basisklebstoff zum Einsatz kommen, der für spezifische Anwendungen, bei denen besondere Anforderungen an eine Verklebung gestellt werden, durch ein oder mehrere Additive oder Zusatzstoff in Form von besagten Verdünnungsmitteln hinsichtlich der benötigten Eigenschaften positiv beeinflusst werden kann.

Erfindungsgemäß weist die Aufschäumkammer eine oder mehrere Beschickungsöffnungen auf, wobei eine erste Zuführeinheit aufweisend ein den Klebstoff enthaltendes Klebstoffreservoir für den Klebstoff sowie eine zweite Zuführeinheit für das gasförmige Aufschäummedium und eine dritte Zuführeinheit für das fließfähige Verdünnungsmittel vorgesehen sind und wobei jede der Zuführeinheiten der Aufschäumkammer die jeweilige Komponente über zumindest eine der Beschickungsöffnungen zuführt.

Jede Zuführeinheit kann dabei eine Baugruppe beinhalten und aus unterschiedlichen, sich für den Einsatzzweck eignenden Bauteilen zusammengesetzt sein. So kann die erste Zuführeinheit für den Klebstoff insbesondere einen Klebstofftank oder einen Klebstoffanschluss für einen externen Tank umfassen. Ferner können Heizeinrichtungen vorgesehen werden, um beispielsweise einen Schmelzklebstoff aufzuschmelzen. Zudem können Rohr- oder Zuführleitungen für den Transport des Klebstoffes vorgesehen werden, die weiter mit einer Heizung ausgestattet sein können. Auch ist der Einsatz von Pumpen, Pulsationsdämfern, Mess- und Regeleinrichtungen, wie Thermometern, Durchflussmessern, Drucksensoren, Regelventilen, Membranventilen, Rückschlagventilen oder ähnlichen dem Fachmann insbesondere aus der Fluidtechnik bekannten Hilfsmittel denkbar.

Die zweite und/oder die dritte Zuführeinheit für das gasförmige Aufschäummittel bzw. das fließfähige Verdünnungsmittel können ebenfalls insbesondere einen Vorratstank oder -speicher oder einen Anschluss für einen Speicher oder eine Anschlussmöglichkeit für eine externe Quelle oder einen externen Tank umfassen. Auch hier können Heiz- oder auch Kühleinrichtungen vorgesehen werden, um das Aufschäummittel und/oder das Verdünnungsmittel vorzuheizen oder abzukühlen. Zudem können Rohr- oder Zuführleitungen für den Transport besagter Komponenten vorgesehen werden, die weiter mit einer Heizung oder Kühlung ausgestattet sein können. Auch ist der Einsatz von Pumpen, Pulsationsdämfern, Wasser- und/oder Ölabscheidern, Mess- und Regeleinrichtungen, wie Thermometer, Durchflussmesser, Drucksensoren, Regelventilen, Membranventilen, Rückschlagventilen oder ähnlichen dem Fachmann insbesondere aus der Fluidtechnik bekannten Hilfsmittel denkbar.

Dabei kann die Aufschäumeinheit für jede Zuführeinheit eine gesonderte Beschickungsöffnung aufweisen. Gleichwohl ist es auch möglich, über eine Beschickungsöffnung eine Mehrzahl an Komponenten in die Aufschäumkammer zuzuführen.

In einer vorteilhaften Weiterbildung weist die Aufschäumeinheit eine Beschickungsöffnung auf, mittels derer alle Komponenten aller Zuführeinheiten der Aufschäumkammer zugeführt werden.

In einer vorteilhaften Weiterbildung ist eine Zuführleitung vorgesehen, die in der Beschickungsöffnung mündet, wobei jede Zuführeinheit mit der Zuführleitung verbunden ist und über diese Zuführleitung in der Aufschäumkammer mündet.

So hat es sich als besonders vorteilhaft erwiesen, eine Zuführleitung zu verwenden, welche in der Beschickungsöffnung mündet, wobei alle der oben genannten drei Komponenten an unterschiedlichen Bereichen der Zuführleitung in selbiger münden. Vorzugsweise ist die Zuführleitung rohrförmig gestaltet, wobei die Mündungen der Komponenten derart angeordnet sind, dass eine Vermischung der Komponenten beispielsweise im Sinne einer zumindest teilweisen Verwirbelung ermöglicht werden kann. Beispielsweise kann die Zuführleitung einen Abzweigbereich oder Verteilerabschnitt aufweisen, wobei die Abzweigungen derart angeordnet sind, dass eine vorzugsweise jedoch mehrere, insbesondere jede der Komponenten in einem Winkel von vorzugsweise größer 30 Grad hinsichtlich der Hauptstromrichtung der Zuführleitung und/oder hinsichtlich einer weiteren Komponente zugeführt wird.

Dabei hat es sich als vorteilhaft herausgestellt, wenn die zweite und/oder die dritte Zuführeinheit über eine Rückschlagarmatur, insbesondere ein Rückschlagventil oder einer Rückschlagklappe mit der Zuführleitung verbunden sind. Hierbei hat sich der Einsatz eines federbelasteten Rückschlagventils als vorteilhaft erwiesen.

In einer vorteilhaften Weiterbildung weist die Zuführleitung selbst zwischen zwei benachbarten Einmündungen zweier Zuführeinheiten eine Rückschlagarmatur, insbesondete ein Rückschlagventil oder andere oben genannte Rückschlagarmaturen auf. Dies kann insbesondere von Vorteil sein, um eine Kontaminierung von Bereichen oder Bauteilen einer Zuführeinheit durch die Komponente einer benachbarten Zuführeinheit zu verhindern.

Ein weiterer Vorteil ist der Einsatz einer Messvorrichtung zum Erfassen des Volumens des zugeführten Klebstoffes sowie eines Stellmittels, um das Volumen des zuzuführenden Verdünnungsmittels einzustellen, wobei eine Steuerungs- und Regelungseinrichtung mittels des erfassten zugeführten Volumens des Klebstoffes das Volumen des zuzuführenden Verdünnungsmittels regelt.

Besagte Messvorrichtung kann dabei Teil der oben beschriebenen Zuführeinheit sein. Bevorzugt kommt als Messvorrichtung ein Durchflussmesser zum Einsatz. Dieser kann idealerweise aus einem Durchflusssensor und einem Messumformer bestehen. Vorzugsweise ist hier der Einsatz eines magnetisch induktiven Durchflussmessers, eines Ultraschall-Durchflussmessers oder eines Schwebekörper-Durchflussmessers denkbar. Denkbar ist aber auch der Einsatz von anderen, sich eignenden und dem Fachmann bekannten Durchflussmessern.

Das Stellmittel kann dabei in Form eines Ventils ausgebildet sein. Vorzugsweise kommt ein Ventil zum Einsatz, welche nicht lediglich diskret schaltet, sondern einen stetigen Übergang der Schaltstellungen zulässt. Damit kann eine Einstellbarkeit des Volumenstroms des Verdünnungsmittels ermöglicht werden. Bevorzugt kommt dabei ein Stetigventil, insbesondere ein Regel-Wegeventil, ein Proportionalventil oder ein Servoventil zum Einsatz.

Bei der Steuerungs- und Regelungseinrichtung kann es sich um eine üblicherweise eingesetzte insbesondere elektronische Steuerungs- und Regelungseinrichtung handeln, die eine Vergleichseinheit umfassen kann, die die Größe des durch die Messvorrichtung erfassten Wertes mit einem zweiten beispielsweise in einem Speichers der Steuerungs- und Regelungseinrichtung vergleicht, und die das Ergebnis des Vergleichs einer in der Steuerungs- und Regelungseinrichtung ebenfalls enthaltenen Steuerungseinheit zuführt, die ein dem Stellmittel zugeführtes Stellsignal daraufhin um einen bestimmten Betrag variiert. Bevorzugt ist dabei eine weitere Messvorrichtung für das Verdünnungsmittel vorgesehen, wobei selbige ebenfalls mit der Steuerungs- und Regelungseinrichtung in Verbindung steht. Zudem ist die Erfassung weiterer Prozessparameter durch die Steuerungs- und Regelungseinrichtung denkbar sowie die gezielte Steuerung- und Regelung der Klebstoffmenge, der Menge an gasförmigen Aufschäummedium und der Menge an Verdünnungsmittel, um die Eigenschaften und die Qualität des Klebstoffschaums zu variieren.

In einer vorteilhaften Weiterbildung sind weiter Messvorrichtungen zum Erfassen der Volumina des zugeführten Klebstoffes und des zugeführten Verdünnungsmittels vorgesehen, wobei ein Stellmittel vorgesehen ist, um das Volumen des zuzuführenden gasförmigen Aufschäummediums einzustellen und wobei die Steuerungs- und Regelungseinrichtung mittels der erfassten zugeführten Volumina des Klebstoffes und des Verdünnungsmittels das Volumen des zuzuführenden gasförmigen Aufschäummediums regelt. Auch diese Messvorrichtungen und Stellmittel sind vorzugsweise als Durchflussmesser bzw. Ventile, die einen stetigen Übergang der Schaltstellungen zulassen gestaltet. Detaillierte Ausführungen zu derartigen Durchflussmessern und Ventilen finden sich oberhalb und gelten für diesen Einsatzzweck entsprechend. Gleiches gilt auch für einen möglichen Einsatz für das gasförmige Aufschäummedium oder weitere Additive und/oder Zusatzstoffe.

Ein weiterer Vorteil ist der Einsatz eines gasförmige Aufschäummedium in form eines Gasgemisches, das zumindest teilweise Luft, Stickstoff, Sauerstoff, Kohlendioxid oder Kohlenstoff oder der Mischung von einem oder mehrerer dieser Gase enthält.

Ein weiterer Vorteil ist der Einsatz eines gasförmigen Aufschäummediums, welches ein Gasgemisch ist, das, bezogen auf das Gesamtvolumen des Gasgemisches mindestens 5 Vol.-% Sauerstoff enthält.

Alternativ dazu kann als gasförmiges Aufschäummedium auch ein Inertgas zur Anwendung kommen, wie beispielsweise Stickstoff und ein Edelgas wie Helium, Neon, Argon, Krypton, Xenon oder Radon. In einer vorteilhaften Ausgestaltung wird das gasförmige Aufschäummedium vor der Zuführung auf eine Temperatur im Bereich von 5 °C bis 45°C eingestellt.

In einer vorteilhaften Ausgestaltung wird das Verdünnungsmittel vor der Zuführung auf eine Temperatur im Bereich von 10°C bis 45 °C eingestellt.

Besonders bevorzugt sind die Temperaturen von Verdünnungsmittel und gasförmigen Aufschäummedium derart eingestellt, dass der Temperaturunterschied vom gasförmigen Aufschäummediums und vom Verdünnungsmittel in einem Bereich von 10 °C bis 30 °C liegt.

Ein weiterer Vorteil ist das Zuführen des gasförmigen Aufschäummediums unter einem Druck größer als 2 bar in die Aufschäumkammer. Vorzugsweise liegt der Druck des Aufschäummediums in einem Bereich von 2 bar bis 10 bar.

Ein weiterer Vorteil ist der Einsatz eines Pufferspeichers als Schaumvorratsbehälter, aus dem der Klebstoffschaum auf ein Substrat ausgegeben werden kann. Dabei hat es sich als vorteilhaft herausgestellt, das Aufschäummedium und/oder das Verdünnungsmittel der Aufschäumkammer unter einem Druck zuzuführen, welcher höher ist als der im Pufferspeicher vorherrschende Druck. Vorzugsweise wird das Aufschäummedium und/oder das Verdünnungsmittel mit einem Druck größer als 0,5bar über dem im Pufferspeicher vorherrschenden Druck der Aufschäumkammer zugeführt.

In einer vorteilhaften Weiterbildung besteht das Verdünnungsmittel zumindest zu einem Teil aus Wasser. Derartige Verdünnungsmittel können beispielsweise besonders kostengünstig sein. In einer vorteilhaften Weiterbildung kann das Verdünnungsmittel ausschließlich aus Wasser bestehen.

Dabei hat es sich als vorteilhaft erwiesen, einen durch das Verdünnungsmittel löslichen Klebstoff einzusetzen. Beispielsweise ist darunter bei dem Einsatz von Wasser als Verdünnungsmittel oder eines auf Wasserbasis bestehenden Verdünnungsmittels ein wasserlöslicher Klebstoff zu verstehen. Unter löslich soll in dieser Erfindung verstanden werden, dass der Klebstoff oder zumindest eine Klebstoffkomponente löslich oder dispergierbar oder emulgierbar durch das Verdünnungsmittel ist. Das kann insbesiondere als grobteilige Dispersion oder auch als kolloidale Lösung geschehen. Das Lösen kann beispielsweise allgemein in wässriger Phase durchgeführt werden, bevorzugt in alkalischen Lösungen. Der Vorgang kann auch durch Temperaturen bis zu 45°C unterstützt werden und findet bevorzugt zwischen ca. 20°C bis 30°C statt.

In einer vorteilhaften Weiterbildung der Erfindung kommt ein thermoplastischer Klebstoff zum Einsatz, der vor der Zuführung auf eine Temperatur im Bereich von 100 °C bis 220°C erwärmt wird. Geeignete Zusammensetzungen einsetzbarer Klebstoffe werden insbesondere in der EP 1904596 oder der EP 2188451 beschrieben.

So hat es sich in einer Weiterbildung als vorteilhaft erwiesen, als Klebstoff einen Schmelzklebstoff einzusetzen, der auf Basis von insbesondere einer Auswahl aus Schmelzklebstoff-Basispolymeren, klebrigmachenden Harzen, Weichmachern und/oder Wachsen, Additiven und/oder Duftstoff besteht.

Die zum Einsatz kommenden thermoplastischen Schmelzklebstoffe weisen dabei vorzugsweise eine hohe Erweichungstemperatur auf (Ring-Ball-Methode, gemessen nach DIN 52011). Es handelt sich dabei vorzugsweise um bei Raumtemperatur feste, nicht reaktive, lösemittelfreie Klebstoffe, die bei erhöhten Temperaturen aufschmelzen, in der Wärme appliziert werden und beim Abkühlen eine feste Verklebung ergeben. Solche Schmelzklebstoffe können ein oder mehrere thermoplastische Basispolymere sowie Harze, Weichmacher und ggf. andere Additive und Zusatzstoffe enthalten. In einem erfindungsgemäß geeigneten Schmelzklebstoff können die bekannten thermoplastischen Basispolymere eingesetzt werden, wie Polyolefine, Ethylenvinylacetatcopolymere, Polyamide, Polyester, Polyurethane, Polyacrylate oder Styrolcopolymere oder -blockcopolymere. Solche Polymere sind dem Fachmann im Prinzip bekannt. Über die Auswahl der Monomeren und das Molekulargewicht ist die Erweichungstemperatur zu beeinflussen.

Beispiele für geeignete Basispolymere sind durch radikalische oder koordinative Polymerisation erhältliche Homo- oder Copolymere auf Basis von Ethylen und/oder Propylen sowie ggf. weiteren copolymerisierbaren Monomeren. Bei den Monomeren, die zusätzlich zu Ethylen und/oder Propylen eingesetzt werden können, handelt es sich um die bekannten mit Ethylen/Propylen copolymerisierbaren olefinisch ungesättigte Monomere. Insbesondere handelt es sich um lineare oder verzweigte C4 bis C20 -α-Olefine, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C1 bis C12 -Alkylreste geeignet sind. Es kann sich dabei um Homopolymere oder Copolymere handeln, die auch weitere Monomere enthalten können. Es sollen unter Homo/Copolymere auch Polymere aus mehr als zwei Monomeren verstanden werden. Dabei soll bevorzugt die Menge der Comonomere unterhalb 30 % betragen. Eine Ausführungsform der Erfindung verwendet Copolymere auf Basis von Ethylen mit C4 bis C20 -α-Olefinen. Eine andere Ausführungsform verwendet Polymere aus Propylen mit C4 bis C20 -α-Olefinen. Ebenso sind Copolymere auf Basis Ethylen und/oder Propylen geeignet. Diese können auch durch Katalyse mit Metallocen-Verbindungen hergestellt werden. Solche Bindemittel sind häufig amorphe ataktische Polyolefine (APAO).

Die so erhaltenen (Co)polymere weisen ein Molekulargewicht von 1000 bis zu 200000 g/mol auf, insbesondere von 1500 bis zu 50000 g/mol, besonders bevorzugt bis zu 30000 g/mol (zahlenmittleres Molekulargewicht (MN), durch Gelpermeationschromatographie bestimmbar). Insbesondere sind solche Polymere geeignet, die bei 150 bis 180°C eine niedrige Viskosität aufweisen. Solche Polyolefine sind dem Fachmann bekannt und können von verschiedenen Herstellern kommerziell erhalten werden.

Weiterhin sind Ethylenvinylacetat (EVA-) Polymere geeignet. Es handelt sich dabei um Copolymere auf Basis von Vinylacetat und Ethylen, die ggf. noch weitere einpolymerisierbare Monomere enthalten können. Diese sollen kristallin oder teilkristallin sein und einen Erweichungspunkt oberhalb von 90°C aufweisen. Dabei soll der Gehalt an Vinylacetat von 10 bis 50 Gew.-% liegen, bevorzugt zwischen 15 und 40 Gew.-%, insbesondere 18 bis etwa 30 Gew.-%.

Zusätzlich können weitere Monomere einpolymerisiert enthalten sein, wie beispielsweise C3 bis C10 ungesättigte Carbonsäuren, wie Acrylsäure, Methacrylsäure, Crotonsäure, Isocrotonsäure; α-β-ungesättigte C4 bis C10 -Alkylendicarbonsäuren, wie Maleinsäure, Fumarsäure oder Itaconsäure. Weitere Monomere, die in dem EVA einpolymerisiert sein können, sind beispielsweise C1 bis C15 Alkylvinylester, C1 bis C15 Alkyl(meth)acrylat, C1 bis C15 Alkylester von Dicarbonsäuren, beispielsweise wie Alkylfumerat, Methyl(meth)acrylat, Butyl(meth)acrlyat, 2-Ethylhexyl(meth)acrylat; C1 bis C6 Hydroxyalkyl(meth)acrylat, wie Hydroxyethyl- oder Hydroxypropyl(meth)acrylat; Acrylnitril, Acrylamid, Methacrylamid, N-methylol-Acrylamid. Solche Monomere können in Mengen von 0,2 bis 10 Gew.-%, insbesondere bis 5 Gew.-% bezogen auf das Polymer in dem EVA-Copolymeren enthalten sein. Durch die Auswahl der Monomeren können wichtige funktionelle Parameter wie Glasübergangstemperatur (TG), Schmelzpunkt oder Erweichungspunkt beeinflusst werden. Das Molekulargewicht (MN) solcher EVA-Copolymere beträgt üblicherweise zwischen 3000 bis 200000 g/mol, insbesondere bis zu 100000g/mol.

Die Auswahl der EVA-Polymere, Verfahren zu ihrer Herstellung und geeignete Comonomere sind dem Fachmann bekannt. Er kann sie nach anwendungstechnischen Eigenschaften, z.B. der Schmelztemperatur, Schmelzviskosität, Erweichungspunkt oder Haftungseigenschaften, auswählen.

Es können beispielsweise auch elastische thermoplastische Block-Copolymere eingesetzt werden. Unter solchen elastischen Polymeren sind insbesondere Styrol-Block-Copolymere zu verstehen, die elastische oder Kautschuk-elastische Eigenschaften aufweisen können. Es kann sich dabei um 2 Block- oder 3 Block-Copolymere handeln, die mindestens einen Styrol-Block aufweisen. Beispiele dafür sind SBR, SAN, Styrol-Isopren-Copolymere (SIS), Styrol-Ethylen/Buthylen-Copolymere (SEBS), Styrol-Ethylen/Propylen-Copolymere (SEPS), Styrol-Isopren-Butylen-Copolymere (SIBS), Strylol-Butadien-Copolymere (SBS), hydrierte Styrol-Butylen-Butadien-Copolymere (SBBS). Solche Block-Copolymere sind dem Fachmann bekannt und kommerziell erhältlich. Über die Länge der Styrol-Blöcke können die Eigenschaften des Block-Copolymeren beeinflusst werden. Solche Polymere können insbesondere auch als Gemische eingesetzt werden. Diese Produkte sind dem Fachmann bekannt und kommerziell erhältlich.

Als Schmelzklebstoff geeignet sind beispielsweise auch thermoplastische Polyester, wie sie durch Umsetzung von Dicarbonsäuren mit entsprechenden polyfunktionellen Alkoholen, insbesondere difunktionellen Alkoholen, beispielsweise difunktionellen Polyethern, wie Polyethylenoxid, erhältlich sind. Solche Polyester sind beispielsweise in der EP-A 028687 beschrieben. Es handelt sich dabei um Umsetzungsprodukte aus aliphatischen, cycloaliphatischen oder aromatischen Dicarbonsäuren, die mit aliphatischen, cyclischen oder aromatischen Polyolen- umgesetzt werden können. Durch Auswahl der Carbonsäuren und der Polyole können kristalline oder teilkristalline Polyester erhalten werden. Üblicherweise werden Dicarbonsäuren und Diole miteinander zur Reaktion gebracht. Es ist jedoch auch möglich, dass anteilsweise geringe Mengen an Tricarbonsäuren oder Triolen eingesetzt werden. Die entstehenden Polyester sollen nicht vernetzt sein und aufschmelzbar, bevorzugt sind lineare Polyester. Das Molekulargewicht geeigneter Polyester soll zwischen 1500 bis 30000 g/mol betragen, insbesondere zwischen 3000 bis 20000 g/mol.

Weitere geeignete Schmelzklebstoffe können beispielsweise thermoplastischen Polyamide sein. Geeignete Polyamide sind beispielsweise in der EP-A 749 463 beschrieben. Es handelt sich dabei um Polyamidschmelzklebstoffe auf Basis von Dicarbonsäuren und Polyetherdiaminen. Ebenfalls geeignete Schmelzklebstoffe sind in der EP-A 204 315 beschrieben. Es handelt sich dabei um Polyesteramide, die auf Basis von Polymerfettsäuren und Polyaminen hergestellt werden. Es können auch Blockcopolymere eingesetzt werden aus Polyamiden und Polyethern, die erhalten werden durch die Umsetzung von im wesentlichen linear aufgebauten, mit Carbonsäurefunktionen und/oder Amingruppen terminierten Polyamiden auf Basis von dimerisierten Fettsäuren sowie aliphatischen bzw. cycloaliphatischen Diaminen mit im wesentlichen linearen aliphatischen Polyethern und/oder deren Aminen.

Dimer- bzw. Polymerfettsäuren sind solche Fettsäuren, die in bekannter Weise durch Dimerisierung von aus natürlichen Rohstoffen gewonnen ungesättigten, langkettigen Fettsäuren hergestellt werden, ggf. noch hydriert werden, und anschließend durch Destillation weitergereinigt werden. Zusätzlich zu den Dimer- bzw. Polymerfettsäuren kann die Säurekomponente des Polyamids noch C4 bis C14 -Dicarbonsäuren enthalten, Beispiele derartiger Dicarbonsäuren sind Maleinsäure, Succinsäure, Adipinsäure, Azelainsäure, Sebacinsäure, Dodecandisäure, Glutarsäure, Korksäure, Pimelinsäure oder auch aromatische Dicarbonsäuren wie zum Beispiel Terephthalsäure oder Mischungen.

Die Diamin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Die Amino-Komponente kann weiterhin cyclische Diamine oder heterocyclische Diamine enthalten wie zum Beispiel 1,4-Cyclohexandiamin, 4,4'-Diamino-dicyclohexylmethan, Piperazin, Cyclohexan-bis-(methylamin), Isophorondiamin, Dimethylpiperazin, Dipiperidylpropan, Dimer-Diamine (Amine hergestellt aus Dimerfettsäuren). Beispielsweise können als Schmelzklebstoff auch Nylontypen eingesetzt, beispielsweise Nylon-6,6, Nylon-6,9 oder Nylon-6,12.

Der erfindungsgemäß geeignete Schmelzklebstoff muss mindestens ein Basispolymer enthalten, es ist möglich, auch Gemische von Polymeren einzusetzen. Da die Polymere wesentlich die Eigenschaften des Schmelzklebstoffs beeinflussen, soll der Erweichungspunkt der Basispolymere von 70 bis 200°C liegen, insbesondere oberhalb von 80°C und unterhalb von 160°C. Zusätzlich kann der Schmelzklebstoff weitere Bestandteile enthalten.

Der Schmelzklebstoff enthält mindestens ein Harz. Das Harz bewirkt eine zusätzliche Klebrigkeit und verbessert die Verträglichkeit der Schmelzklebstoff-Komponenten. Es handelt sich dabei insbesondere um Harze, die einen Erweichungspunkt von 70 bis 140°C (Ring-Ball-Methode, DIN 52011) besitzen. Es sind dieses beispielsweise aromatische, aliphatische oder cycloaliphatische Kohlenwasserstoff-Harze, sowie modifizierte oder hydrierte Versionen davon. Beispiele hierfür sind aliphatische oder alicyclische Petroleum-Kohlenwasserstoffharze und hydrierte Derivate. Weitere, im Rahmen der Erfindung geeignete Harze sind Hydroabietylalkohol und seine Ester, insbesondere seine Ester mit aromatischen Carbonsäuren wie Terephthalsäure und Phthalsäure; vorzugsweise modifizierte Naturharze, wie Harzsäuren aus Balsamharz, Tallharz oder Wurzelharz, z.B. vollverseiftes Balsamharz oder Alkylester von gegebenenfalls teilhydriertem Kolophonium mit niedrigen Erweichungspunkten wie z.B. Methyl-, Diethylenglykol-, Glycerin- und Pentaerythrit-Ester; Terpen-Harze, insbesondere Copolymere des Terpens, wie Styrol-Terpene, α-Methyl-Styrol-Terpene, Phenol-modifizierte Terpenharze sowie hydrierte Derivate davon; Acrylsäure-Copolymerisate, vorzugsweise Styrol-Acrylsäure-Copolymere und Umsetzungs- produkte auf Basis funktioneller Kohlenwasserstoffharze. Bevorzugt ist es, partiell polymerisiertes Tallharz, hydrierte Kohlenwasserstoffharze oder Kolophonium und seine Derivate einzeln oder im Gemisch einzusetzen.

Das Harz besitzt ein niedriges Molekulargewicht von unterhalb 2000 g/mol, insbesondere unterhalb von 1500 g/mol. Es kann chemisch inert sein oder sie kann ggf. noch funktionelle Gruppen enthalten, wie beispielsweise OH-Gruppen, Carboxylgruppen oder Doppelbindungen. Die Menge des Harzes soll zwischen 0 bis 40 Gew.-% bezogen auf den Schmelzklebstoff betragen, insbesondere 5 bis 30 Gew.-%.

Als weitere Bestandteile sind in dem Schmelzhaftklebstoff Additive oder Zusatzstoffe enthalten, die bestimmte Eigenschaften des Klebstoffs beeinflussen können, wie z. B. Kohäsionsfestigkeit, Viskosität, Erweichungspunkt oder Verarbeitungsviskosität. Darunter sind beispielsweise Weichmacher, Stabilisatoren, Wachse, Haftvermittler, Antioxidantien oder ähnliche Zusatzstoffe zu verstehen. Die Menge soll bis zu 30 Gew. % betragen. Es können auch mehrere Additive als Gemisch eingesetzt werden. Weiterhin können Füllstoffe zur Festigkeitserhöhung eingesetzt werden.

Weichmacher werden vorzugsweise zum Einstellen der Viskosität oder der Flexibilität verwendet und sind im allgemeinen in einer Konzentration von 0-20 Gew.-%, vorzugsweise von 0-10 Gew.-% enthalten. Geeignete Weichmacher sind beispielsweise medizinische Weißöle, naphtenische Mineralöle, Polypropylen-, Polybuten-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet.

Gegebenenfalls können dem Schmelzklebstoff Wachse in Mengen von 0 bis 30 Gew.-% zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen oder synthetischen Ursprungs sein. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sarsolwachse usw. eingesetzt werden. Als synthetische Wachse finden Polyalkylenwachse sowie Polyethylenglykolwachse Verwendung. Vorzugsweise werden petrochemische Wachse wie Petrolatum, Mikrowachse sowie synthetische Wachse, insbesondere Polyethylenwachse, Polypropylenwachse, ggf. PE oder PP-Copolymere, Fischer-Tropsch-Harze, Paraffinwachse oder mikrokristalline Wachse eingesetzt.

Eine weitere Gruppe von Additiven sind Stabilisatoren oder Lichtschutzmittel. Sie haben die Aufgabe, die Polymere während der Verarbeitung vor Zersetzung zu schützen. Hier sind insbesondere die Antioxidantien zu nennen. Sie werden üblicherweise in Mengen bis zu 3 Gew.-%, vorzugsweise in Mengen von etwa 0,1 bis 1,0 Gew.-% dem Schmelzhaftklebstoff beigefügt.

Ggf. können dem Klebstoff auch Füllstoffe in Mengen bis zu 25 Gew.-% zugesetzt werden, beispielsweise feingemahlene anorganische Verbindungen wie Kreide, beschichtete Kreide, Kalkmehl, Calcium-Magnesium-Carbonate, Aluminiumoxide und -hydroxide, gefällte Kieselsäure, Zeolithe, Bentonite, Glas, Hohlkugeln oder gemahlene Mineralien. Diese sollen als Pulver vorliegen, d.h. eine Korngröße zwischen 1 bis 200 µm aufweisen, insbesondere zwischen 3 bis 50 µm. Diese werden in dem Klebstoff homogen dispergiert. Über Auswahl und Menge kann die Festigkeit des Klebstoffs beeinflusst werden und sein Viskositätsverhalten.

Solche Additive sind dem Fachmann im Prinzip bekannt. Er kann eine Auswahl nach den erwünschten Eigenschaften des Schmelzklebstoffs treffen.

Alternativ kann sich auch der Einsatz eines Klebstoffes in Form einer wässrigen Dispersion als zweckmäßig erweisen, welche mindestens 50 Gew.-% (bezogen auf den Festkörper der Dispersion) Polyvinylacetatcopolymere (PVAc) enthalten. Weiterhin können diese Dispersionen bis zu 50 Gew.-% an Hilfsmitteln enthalten, beispielsweise Tenside, Stabilisatoren, Pigmente, Füllstoffe, Verdickungsmittel, Entschäumer und andere inerte Polymere.

Solche Polymerdispersionen sind dem Fachmann im Prinzip bekannt. Es handelt sich dabei insbesondere um Copolymere auf Basis von durch radikalische Emulsions- oder Suspensionspolymerisation umgesetzte Monomere. Der Begriff Dispersion soll in dieser Erfindung auch Emulsionen, Suspensionen oder wässrige Lösungen umfassen.

Es sollen als Monomere überwiegend Vinylester enthalten sein, es können zusätzlich auch Anteile an polymerisierbaren Monomeren, die in anionische Gruppen überführbare funktionelle Gruppen tragen, beispielsweise Carboxylgruppen, Anteile an unpolaren copolymerisierbaren Monomeren, wie aromatische Monomere oder ungesättigten Carbonsäureester, Anteile an polare Gruppen tragenden Monomeren und gegebenenfalls geringe Anteile an polymerisierbaren Verbindungen mit mehr als einer Doppelbindung.

Es können verschiedene copolymerisierbare Monomere enthalten sein, es sollen aber bevorzugt keine halogenierten Monomere verwendet werden oder Monomere, die miteinander reagierende funktionelle Gruppen aufweisen, die später bei Lagerung oder Applikation miteinander vernetzen können.

Ein geeignetes Copolymer ist aus verschiedenen copolymerisierbaren Monomeren aufgebaut. Als Hauptbestandteil sind Ester aus Vinylalkohol und C2 bis C6 - Monocarbonsäuren enthalten, beispielsweise Vinylacetat oder Vinylhexanoat, insbesondere Vinylacetat, Vinylpropionat und/oder Vinyl-n-butyrat.

Weiterhin können gegebenenfalls copolymerisierbare Monomere enthalten sein, die als weitere funktionelle Gruppe Säuregruppen enthalten. Es kann sich dabei anorganische Säuregruppen handeln, wie Sulfonsäure-, Phosphorsäure- oder Phosphonsäuregruppen, oder bevorzugt um Carbonsäurengruppen. Beispiele dafür sind Vinylphenylsulfonsäure, Vinylsulfonsäure, Vinylphosphorsäure oder Vinylphenylphosphonsäure. Insbesondere sollen α,β-ungesättigte C3 bis C9 -Mono- oder Dicarbonsäuren enthalten sein, insbesondere C3 bis C5. Besonders bevorzugt handelt es sich dabei um Acrylsäure, Methacrylsäure, Itaconsäure, Crotonsäure und/oder Maleinsäure, Fumarsäure oder deren Halbester mit C1- bis C4-Alkoholen. Es können auch die entsprechenden Carbonsäureanhydride eingesetzt werden.

Weiterhin können erfindungsgemäß geeignete Copolymere zusätzlich unpolare Monomere enthalten, d.h. diese sollen keine polaren Gruppen aufweisen. Beispiele dafür sind Ester aus α,β-ethylenisch ungesättigten C2 bis C5 -Mono- oder Dicarbonsäuren mit C1 bis C12 -linearen oder verzweigten Alkanolen, wie beispielsweise Acrylsäure- und Methacrylsäuremethyl-, -ethyl-, -n-butyl-, -iso-butyl und -2-ethylhexylester, Crotonsäuremethyl-, -ethyl-, -propylester, Maleinsäure- und Fumarsäuredimethyl-oder -di-n-butylester. Weiterhin können als unpolare Monomere Vinylester langkettiger linearer oder verzweigter Monocarbonsäuren enthalten sein. Beispiele dafür sind Vinylester von C7 bis C18-Monocarbonsäuren, wie Stearinsäure, Laurinsäure oder Versaticsäuren.

Ebenso ist es nicht ausgeschlossen, dass die Polymere durch Verzweigungsbausteine miteinander schwach vernetzt sind oder einen verzweigten Aufbau besitzen. Das kann durch geringe Anteile an mehrfachfunktionellen Monomeren erreicht werden. Es kann sich dabei um di- oder polyfunktionelle Monomere handeln. Diese polyfunktionellen Monomere führen zu einer Verzeigung bzw. Vernetzung innerhalb der Polymerpartikel. Auf diese Weise lässt sich auch Quellverhalten oder Viskosität der Dispersion beeinflussen. Das Molekulargewicht der Copolymere ist hoch, es liegt meist über 250000 g/mol (wie über GPC gegen Polystyrolstandard bestimmbar).

Als Schutzkolloid zur Herstellung der Polymerdispersion können anionische oder nicht-ionische Substanzen eingesetzt werden. Beispiele dafür sind natürliche Polymere, wie Stärkeether und/oder Celluloseether oder deren Derivate, z.B. modifiziert durch Oxidation, Veresterung, Veretherung, sauren Abbau, insbesondere Hydroxyalkyletherstärken, Hydroxyalkylcellulosen, Carboxyalkylcellulosen, Carboxyalkyletherstärken; Dextrine oder Hydroxyalkyldextrine. Diese können einzeln oder im Gemisch eingesetzt werden.

Die Schutzkolloide sollen, gegebenenfalls auch nach Neutralisation, anionisch oder neutral sein. Solche Produkte sind kommerziell erhältlich und können vom Fachmann nach ihren Eigenschaften ausgewählt werden.

Die geeigneten Polymerdispersionen werden nach an sich bekannten Verfahren in wässriger Lösung durch radikalische Polymerisation in Gegenwart von Schutzkolloiden oder Tensiden hergestellt. Verfahren zur Herstellung der Copolymere sind dem Fachmann bekannt. Außerdem sind solche Dispersionen in unterschiedlicher Zusammensetzung mit verschiedenen Molekulargewichten kommerziell erhältlich.

Die Feststoffkonzentration der Polymerdispersion kann bei der Herstellung in weitem Bereich eingestellt werden und beispielsweise 25 bis 75 Gew.-%, insbesondere 45 bis 65 Gew.-%, betragen. Bevorzugt sollen diese Dispersionen frei von organischen Lösemitteln sein, d.h. es sollen nur geringe Mengen unterhalb 0,5% enthalten sein.

Bevorzugte Ausführungsformen sind mit den beiliegenden Figuren gezeigt. Dabei zeigt
Figur1 eine schematische Funktionsansicht einer Aufschäumvorrichtung,
Figur 2 eine teilgeschnittene Seitenansicht einer Aufschäumeinheit der Aufschäumvorrichtung aus Figur 1.

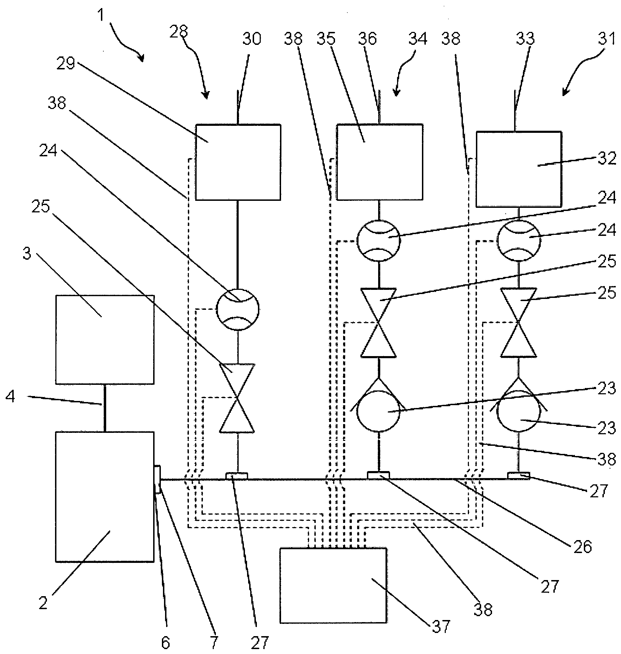

Figur 1 zeigt eine schematische Funktionsansicht einer Aufschäumvorrichtung 1 umfassend eine Aufschäumeinheit 2 zum Aufschäumen eines Klebstoffes mittels eines gasförmigen Aufschäummediums. Als Klebstoff kommt im vorliegenden Ausführungsbeispiel eine wässrige Dispersion zum Einsatz, welche mindestens 50 Gewichtsprozent (bezogen auf den Festkörper der Dispersion) Polyvenylacethatcopolymere (PVAC) enthält. Zudem enthält die Dispersion weitere Hilfsmittel, beispielsweise Tenside, Stabilisatoren, Pigmente, Füllstoffe und/oder Verdickungsmittel. Als gasförmiges Aufschäummittel kommt im vorliegenden Ausführungsbeispiel Druckluft zum Einsatz, also ein Gasgemisch, wobei auf das Gesamtvolumen des Gasgemisches mindestens 5 Volumenprozent Sauerstoff in diesem Gasgemisch enthalten sind. Dabei ist es möglich, dass die Druckluft aus üblicher, komprimierter Luft besteht, die im Wesentlichen Stickstoff und Sauerstoff beinhaltet, wobei insbesondere Argon, Kohlenstoffdioxid, Wasserstoff und Spuren anderer Gase enthalten sein können. Die Aufschäumeinheit weist nicht dargestellte mechanische Aufschäummittel auf, mit denen der besagte Klebstoff mittels des gasförmigen Aufschäummediums zu einem Klebstoffschaum aufgeschäumt werden kann. Besagter Klebstoffschaum gelangt durch eine Ausgabeöffnung 5 über eine Verbindungsleitung 4 in einen Pufferspeicher 3, aus dem der Klebstoffschaum auf ein Substrat ausgegeben werden kann. Um die Qualität und die Eigenschaften des Klebstoffschaumes beeinflussen zu können, ist bei der Aufschäumvorrichtung 1 zusätzlich die Zuführung einer dritten Komponente in die Aufschäumeinheit 2 vorgesehen, wobei es sich bei der dritten Komponente um ein fließfähiges Verdünnungsmittel handelt, um den Klebstoff und/oder den Klebstoffschaum zu verdünnen. Im gezeigten Ausführungsbeispiel handelt es sich bei dem fließfähigen Verdünnungsmittel um Wasser. Optional kannes sich auch um ein Additiv handelt, welches die Eigenschaften des Klebstoffes und/oder des Klebstoffschaums beeinflussen.

Die drei Komponenten werden über entsprechende Zufuhreinheiten 28, 31, 34 bereitgestellt. Dabei ist eine erste Zufuhreinheit 28 zur Bereitstellung des Klebstoffes vorgesehen. Die erste Zuführeinheit 28 umfasst ein Klebstoffreservoir 35, welches jeweils einen Pufferspeicher oder ein Klebstoffreservoir 29 aufweisen und zudem mit einem Klebstoffanschluss 30 zur Befüllung insbesondere mittels einer druckluftbetriebenen Pumpe ausgerüstet sein kann. An das Klebstoffreservoir 29 ist eine Leitung angeschlossen, die einen Durchflussmesser 24 aufweist sowie ein Regelventil 25 zur Steuerung oder Regelung der Klebstoffversorgung über einen Flansch 27, der als Zuführmittel an eine Zuführleitung 26 angeschlossen, wobei besagte Zuführleitung 26 über einen weiteren Flansch 27 in eine Beschickungsöffnung 6 der Aufschäumeinheit 2 mündet. Die zweite Zuführeinheit 31 dient der Bereitstellung des gasförmigen Aufschäummediums und weist einen Druckluftspeicher 32 auf, sowie einen externen Druckluftanschluss 33. Alternativ kann auch lediglich ein externer Druckluftanschluss 33 vorgesehen werden und auf den als Pufferspeicher ausgebildeten Druckluftspeicher 32 verzichtet werden. Zudem ist ein Leitungssystem vorgesehen, welches insbesondere ein Durchflussmesser 24 umfasst sowie ein Regelventil 25 zur Steuerung oder Regelung der Druckluftversorgung. Ein Rückschlagventil 23 verhindert eine Kontamination der Bauteile der zweiten Zuführeinheit 31. Selbige ist über einen Flansch 27 an oben beschriebene Zuführleitung 26 angeschlossen und mündet, wie auch die erste Zuführeinheit 28, über die Zuführleitung 26 über besagte Beschickungsöffnung 6 in der Aufschäumeinheit 2. Einen ähnlichen Aufbau beinhaltet auch die dritte Zuführeinheit 34 aufweisend ein Wasserreservoir 35 sowie einen externen Wasseranschluss 36, wobei auch hier der Einsatz eines Wasserreservoirs 35 abdingbar ist. Zudem sind auch insbesondere Durchflussmesser 24, Regelventil 25 sowie ein Rückschlagventil 23 vorgesehen. Wie die beiden andern Zuführeinheiten 28, 31 ist auch die dritte Zuführeinheit 34 über einen Flansch 27 mit besagter Zuführleitung 26 verbunden und mündet über selbige über die Beschickungsöffnung 6 in der Aufschäumeinheit 2.

Die oberhalb beschriebenen Ventile 25 stellen dabei Stellmittel bereit, um das Verhältnis der einzelnen Komponenten zueinander zur Beeinflussung der Eigenschaften des Klebstoffschaums einzustellen. Die Durchflussmesser 24 dienen der Erfassung der über die Zuführeinheiten 28, 31, 34 bereitgestellten Volumina an Klebstoff, gasförmigen Aufschaummedium bzw. fließfähigem Verdünnungsmittel. Zur Erfassung der Daten sowie zur Steuerung und Regelung ist eine Steuereinheit 37 vorgesehen, die über Leitungen 38 mit einer Vielzahl der Bauteile der Zuführeinheiten 28, 31, 34 verbunden ist. So eignet sich insbesondere die Ausstattung des Klebstoffreservoirs 29, des Druckluftspeichers 32 und/oder des Wasserreservoirs 35 mit sich eignenen Sensoren, wie beispielsweise Füllstandssensoren, Temperatursensoren, Drucksensoren usw., wobei selbige über entsprechende Leitungen 38 mit der Steuereinheit 37 verbunden sind, um die bereitzustellenden Komponenten überwachen zu können. Ferner sind die Durchflussmesser 24 sowie die Ventile 25 mit der Steuereinheit verbunden. Insbesondere ist eine derartige Funktionsweise der Aufschäumvorrichtung 1 und im Speziellen der Steuereinheit 37 vorgesehen, dass zur Ausgabe eines Klebstoffschaumes das Ventil 25 der ersten Zuführeinheit 28 durch die Steuereinheit 37 geöffnet wird. Das Volumen des ausgehenden Klebstoffes wird durch den Durchflussmesser 24 erfasst, anhand dessen die Steuereinheit 37 das Ventil 25 der zweiten Zuführeinheit 31 ansteuert, wobei mittels des Durchflussmessers 24 der zweiten Zuführeinheit 31 eine Regelung des zum Aufschäumen benötigten Volumens des gasförmigen Aufschäummittels gewährleistet werden kann. Auf ähnliche Weise ist eine Steuerung und Regelung der dritten Zuführeinheit 34 mittels der Steuereinheit 37 möglich, um den Grad der Verdünnung somit die Qualität des auszugebenden Klebstoffschaums einzustellen.

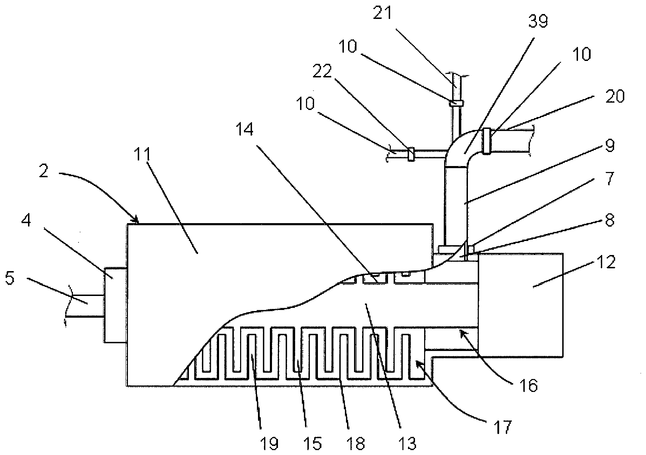

Figur 2 zeigt eine Aufschäumeinheit 2 einer Aufschäumvorrichtung 1. Die Aufschäumeinheit 2 beinhaltet ein zylindrisches Gehäuse 11, welches eine Aufschäumkammer 17 umschließt. An der Gehäuseinnenwand 18 sind radial nach innen vorstehende Statorrippen 19 vorgesehen. Die Aufschäumeinheit 2 weist an der einen Stirnseite die Ausgabeöffnung 5 auf, mit einer darin angeschlossenen Verbindungsleitung 4. An der gegenüberliegenden Stirnseite ist ein nicht im Detail gezeigter Motor 12 vorgesehen, der zum Antrieb einer in die Aufschäumkammer 17 ragenden Welle 13 vorgesehen ist. Die Welle weist an ihrem Wellenmantel 14 radial nach außen vorstehende Rotorrippen 15 auf. Dabei sind besagte Statorrippen 19 und die Rotorrippen 15 derart gestaltet und zueinander angeordnet, dass umfänglich über den Wellenmantel 14 verlaufende Reihen von Rotorrippen 15 zwischen umfänglich über die Gehäuseinnenwand 18 verlaufende Reihen von Statorrippen 19 angeordnet sind. Diese Rotorrippen 15 bilden zusammen mit den Statorrippen 19 die mechanischen Aufschäummittel und dienen der Aufschäumung des in die Aufschäumkammer 17 zugeführten Klebstoffes mit dem zugeführten gasförmigen Aufschäummediums und ggf. des fließfähigen Verdünnungsmittels.

Auf der den Motor 12 aufweisenden Antriebsseite der Aufschäumeinheit 2 ist ein an die Aufschäumkammer 17 angrenzender Kammervorraum 16 vorgesehen, welcher in seiner Außenwand die Beschickungsöffnung 6 zur Zuführung der drei Komponenten aufweist. Über den Flansch 7 ist ein Zuführglied 9 mit der Aufschäumeinheit 2 verbunden und mündet in der Beschickungsöffnung 6. Das Zuführglied 9 kann Teil oben beschriebener Zuführleitung 8 oder auch die Zuführleitung 8 selbst sein. Im gezeigten Ausführungsbeispiel weist das Zuführglied 9 einen Verteilerabschnitt 39 auf, an dem jeweils über Flansche 10 eine Klebstoffzuführung 20, eine Wasserzuführung 21 und eine Druckluftzuführung 22 mit dem Zuführglied 9 verbunden sind und über selbiges in der Beschichtungsöffnung 6 münden. Dabei ist der Verteilerabschnitt 39 derart gestaltet, dass jede der zugeführten Komponenten in einem Winkel von 30° hinsichtlich der Hauptstromrichtung des Zuführgliedes 9, also der Richtung in der alle Komponenten über der Beschichtungsöffnung 6 im Kammervorraum 60 münden, oder hinsichtlich jeweils einer weiteren Komponente zugeführt wird. Auf diese Weise können die Komponenten schon vor dem Erreichen der Aufschäumkammer 17 miteinander vermischt werden. Im gezeigten Ausführungsbeispiel kommt ein kreuzförmig gestalteter Verteilerabschnitt 39 zum Einsatz, wobei die vertikale Linie des Kreuzes durch zwei gegenüberliegende Komponentenzuführungen, beispielsweise die Druckluftzuführung 22 und die Klebstoffzuführung 20 erreicht wird. Hierdurch ist eine besonders gute Durchmischung von Klebstoff und Druckluft bereits vor dem Erreichen des Kammervorraums 16 und der Aufschäumkammer 17 möglich. Die horizontale Linie wird auf der hinsichtlich der Aufschäumeinheit zugewandten Seite durch die mit dem Flansch 7 verbundene Zuführung des Zufuhrgliedes 9 bereitgestellt, auf der gegenüberliegenden Seite durch eine Komponentenzuführung, beispielsweise durch die Wasserzuführung 21. Selbstverständlich sind für die Aufschäumvorrichtung 1 auch andere sich eignende Aufschäumvorrichtungen einsetzbar.

**Bezugszeichenliste**

| | | | |
|---|---|---|---|
| 1 | Aufschäumvorrichtung | 20 | Klebstoffzuführung |
| 2 | Aufschäumeinheit | 21 | Wasserzuführung |
| 3 | Pufferspeicher | 22 | Druckluftzuführung |
| 4 | Verbindungsleitung | 23 | Rückschlagventil |
| 5 | Ausgabeöffnung | 24 | Durchflussmesser |
| 6 | Beschickungsöffnung | 25 | Regelventil |
| 7 | Gehäuseflansch | 26 | Zuführleitung |
| 8 | Zuführleitung | 27 | Flansch |
| 9 | Zuführglied | 28 | Erste Zuführeinheit |
| 10 | Zuführflansch | 29 | Klebstoffreservoir |
| 11 | Gehäuse | 30 | Klebstoffanschluss |
| 12 | Motor | 31 | Zweite Zuführeinheit |
| 13 | Welle | 32 | Druckluftspeicher |
| 14 | Wellenmantel | 33 | Druckluftanschluss |
| 15 | Rotorrippe | 34 | Dritte Zuführeinheit |
| 16 | Kammervorraum | 35 | Wasserreservoir |
| 17 | Aufschäumkammer | 36 | Wasseranschluss |
| 18 | Gehäuseinnenwand | 37 | Steuereinheit |
| 19 | Statorrippe | 38 | Leitung |
| | | 39 | Verteilerabschnitt |

## Patentansprüche

1. Verfahren zum Vermischen von zumindest drei Komponenten zur Ausgabe eines Klebstoffschaums, wobei als Komponenten ein Klebstoff, ein gasförmiges Aufschäummedium und ein fließfähiges Verdünnungsmittel zum Einsatz kommen, unter Verwendung einer Aufschäumvorrichtung (1) aufweisend eine Aufschäumeinheit (2) mit einer Aufschäumkammer (17) mit darin enthaltenen mechanischen Aufschäummitteln (15, 19) zum Mischen der drei der Aufschäumkammer (17) zugeführten Komponenten, wobei die Aufschäumkammer (17) eine oder mehrere Beschickungsöffnungen (6) aufweist, und wobei eine erste Zuführeinheit (28) für den Klebstoff sowie eine zweite Zuführeinheit (31) für das gasförmige Aufschäummedium und eine dritte Zuführeinheit (34) für das fließfähige Verdünnungsmittel vorgesehen sind, wobei jede der Zuführeinheiten (28, 31, 34) der Aufschäumkammer (17) die jeweilige Komponente über die zumindest eine Beschickungsöffnung (6) zuführt, wobei Stellmittel (25) vorgesehen sind, um das Verhältnis der einzelnen Komponenten zueinander zur Beeinflussung der Eigenschaften des Klebstoffschaums einzustellen.

2. Verfahren nach Anspruch 1, **dadurch gekennzeichnet, dass** eine Aufschäumvorrichtung (1) zum Einsatz kommt, bei der alle Komponenten aller Zuführeinheiten (28, 31, 34) der Aufschäumkammer (17) über dieselbe Beschickungsöffnung (6) zugeführt werden.

3. Verfahren nach Anspruch 2, **dadurch gekennzeichnet, dass** eine Aufschäumvorrichtung (1) zum Einsatz kommt, bei der eine Zuführleitung (26) in der Beschickungsöffnung (6) mündet, wobei jede Zuführeinheit (28, 31, 34) mit der Zuführleitung (26) verbunden ist und über die Zuführleitung (26) in der Aufschäumkammer (17) mündet.

4. Verfahren nach Anspruch 3, **dadurch gekennzeichnet, dass** eine Aufschäumvorrichtung (1) zum Einsatz kommt, bei der die zweite und/oder die dritte Zuführeinheit (31, 34) über ein Rückschlagventil (23) mit der Zuführleitung (26) verbunden ist.

5. Verfahren nach einem der Ansprüche 3 oder 4, **dadurch gekennzeichnet, dass** eine Aufschäumvorrichtung (1) zum Einsatz kommt, bei der die Zuführleitung (26) zwischen zwei benachbarten Einmündungen von zwei Zuführeinheiten (28, 31, 34) ein Rückschlagventil (23) aufweist.

6. Verfahren nach einem der vorhergehenden Ansprüche, **dadurch gekennzeichnet, dass** eine Aufschäumvorrichtung (1) zum Einsatz kommt, bei der eine Messvorrichtung (24) zum Erfassen des Volumens des zugeführten Klebstoffes vorgesehen ist und dass ein Stellmittel (25) vorgesehen sind, um das Volumen des zuzuführenden Verdünnungsmittels einzustellen, wobei eine Steuereinheit (37) mittels des erfassten zugeführten Volumens des Klebstoffes über das Stellmittel (25) das Volumen des zuzuführenden Verdünnungsmittels regelt.

7. Verfahren nach einem der vorhergehenden Ansprüche, **dadurch gekennzeichnet, dass** eine Aufschäumvorrichtung (1) zum Einsatz kommt, bei der eine Messvorrichtung (24) zum Erfassen der Volumina des zugeführten Klebstoffes und des zugeführten Verdünnungsmittels vorgesehen sind und dass ein Stellmittel (25) vorgesehen ist, um das Volumen des zuzuführenden gasförmigen Aufschäummediums einzustellen, wobei eine Steuereinheit (37) mittels der erfassten zugeführten Volumina des Klebstoffes und des Verdünnungsmittels über das Stellmittel (25) das Volumen des zuzuführenden gasförmigen Aufschäummediums regelt.

8. Verfahren nach einem der Ansprüche 7 oder 8, **dadurch gekennzeichnet, dass** eine Aufschäumvorrichtung (1) zum Einsatz kommt, bei der das Stellmittel (25) ein regelbares Ventil (25) sowie eine Messvorrichtung (24) zum Erfassen des zugeführten Volumens des Verdünnungsmittels und/oder des gasförmigen Aufschäummediums umfasst.

9. Verfahren nach einem der vorhergehenden Ansprüche, **dadurch gekennzeichnet, dass** das gasförmige Aufschäummedium ein Gasgemisch ist, das zumindest teilweise Luft, Stickstoff, Sauerstoff, Kohlendioxid oder Kohlenstoff oder der Mischung von einem oder mehreren dieser Gase enthält.

10. Verfahren nach einem der vorhergehenden Ansprüche, **dadurch gekennzeichnet, dass** das gasförmige Aufschäummedium ein Gasgemisch ist, das, bezogen auf das Gesamtvolumen des Gasgemisches mindestens 5 Vol.-% Sauerstoff enthält.

11. Verfahren nach einem der vorhergehenden Ansprüche, **dadurch gekennzeichnet, dass** das gasförmige Aufschäummedium vor der Zuführung auf eine Temperatur im Bereich von 5 °C bis 45°C eingestellt wird.

12. Verfahren nach einem der vorhergehenden Ansprüche, **dadurch gekennzeichnet, dass** das Verdünnungsmittel vor der Zuführung auf eine Temperatur im Bereich von 10°C bis 45 °C eingestellt wird.

13. Verfahren nach einem der vorhergehenden Ansprüche, **dadurch gekennzeichnet, dass** eine Aufschäumvorrichtung (1) zum Einsatz kommt, bei der ein Pufferspeicher (3) als Schaumvorratsbehälter vorgesehen ist, wobei das gasförmige Aufschäummedium und/oder das Verdünnungsmittel der Aufschäumkammer (17) unter einem Druck zugeführt wird, welcher höher ist als der im Pufferspeicher (3) vorherrschende Druck.

14. Verfahren nach Anspruch 13, **dadurch gekennzeichnet, dass** das Aufschäummedium und/oder das Verdünnungsmittel der Aufschäumkammer (17) mit einem Druck größer als 0,5bar über dem im Pufferspeicher (3) vorherrschenden Druck zugeführt wird.

15. Verfahren nach einem der vorhergehenden Ansprüche, **dadurch gekennzeichnet, dass** das Verdünnungsmittel zumindest zu einem Teil aus Wasser besteht.

## Claims

1. A method for mixing at least three components in order to dispense an adhesive foam, wherein an adhesive, a gaseous foaming medium and a flowable diluent are used as components, using a foaming device (1) comprising a foaming unit (2) which has a foaming chamber (17) having mechanical foaming means (15, 19) contained therein for mixing the three components supplied to the foaming chamber (17), wherein the foaming chamber (17) has one or more feed openings (6), and wherein a first supply unit (28) for the adhesive and a second supply unit (31) for the gaseous foaming medium and a third supply unit (34) for the flowable diluent are provided, wherein each of the supply units (28, 31, 34) supply the relevant components to the foaming chamber (17) via the at least one feed opening (6), wherein adjusters (25) are provided in order to adjust the ratio of the individual components to one another in order to influence the properties of the adhesive foam.

2. The method according to claim 1, **characterized in that** a foaming device (1) is used in which all components of all supply units (28, 31, 34) are supplied to the foaming chamber (17) via the same feed opening (6).

3. The method according to claim 2, **characterized in that** a foaming device (1) is used in which a supply line (26) opens into the feed opening (6), each supply unit (28, 31, 34) being connected to the supply line (26) and opening into the foaming chamber (17) via the supply line (26).

4. The method according to claim 3, **characterized in that** a foaming device (1) is used in which the second and/or the third supply unit (31, 34) is connected to the supply line (26) via a non-return valve (23).

5. The method according to one of claims 3 or 4, **characterized in that** a foaming device (1) is used in which the supply line (26) has a non-return valve (23) between two adjacent openings in two supply units (28, 31, 34).

6. The method according to one of the preceding claims, **characterized in that** a foaming device (1) is used in which a measuring device (24) is provided for detecting the volume of the supplied adhesive, and **in that** an adjuster (25) is provided in order to adjust the volume of the diluent to be supplied, a control unit (37) regulating, via the adjuster (25) by means of the detected supplied volume of the adhesive, the volume of the diluent to be supplied.

7. The method according to one of the preceding claims, **characterized in that** a foaming device (1) is used in which a measuring device (24) is provided for detecting the volumes of the supplied adhesive and the supplied diluent, and **in that** an adjuster (25) is provided in order to adjust the volume of the gaseous foaming medium to be supplied, a control unit (37) regulating, via the adjuster (25) by means of the detected supplied volumes of the adhesive and the diluent, the volume of the gaseous foaming medium to be supplied.

8. The method according to one of claims 7 or 8, **characterized in that** a foaming device (1) is used in which the adjuster (25) comprises a regulatable valve (25) and a measuring device (24) for detecting the supplied volume of the diluent and/or the gaseous foaming medium.

9. The method according to one of the preceding claims, **characterized in that** the gaseous foaming medium is a gas mixture containing, at least in part, air, nitrogen, oxygen, carbon dioxide or carbon, or the mixture of one or more of these gases.

10. The method according to one of the preceding claims, **characterized in that** the gaseous foaming medium is a gas mixture which contains at least 5 vol.% of oxygen, based on the total volume of the gas mixture.

11. The method according to one of the preceding claims, **characterized in that** the gaseous foaming medium is adjusted to a temperature in the range of 5 °C to 45 °C prior to being supplied.

12. The method according to one of the preceding claims, **characterized in that** the diluent is adjusted to a temperature in the range of 10 °C to 45 °C prior to being supplied.

13. The method according to one of the preceding claims, **characterized in that** a foaming device (1) is used in which a buffer store (3) is provided as a foam storage container, the gaseous foaming medium and/or the diluent being supplied to the foaming chamber (17) under a pressure which is higher than the pressure prevailing in the buffer store (3).

14. The method according to claim 13, **characterized in that** the foaming medium and/or the diluent is supplied to the foaming chamber (17) at a pressure greater than 0.5 bar above the pressure prevailing in the buffer store (3).

15. The method according to one of the preceding claims, **characterized in that** the diluent consists at least in part of water.

## Revendications

1. Procédé de mélange d'au moins trois composants pour former une mousse adhésive, les composants utilisés étant un adhésif, un agent moussant gazeux et un diluant fluide, au moyen d'un dispositif de production de mousse (1) comportant une unité de production de mousse (2) dotée d'une chambre de moussage (17) contenant des agents moussants mécaniques (15, 19), destinée au mélange des trois composants fournis à la chambre de moussage (17), la chambre de moussage (17) présentant un ou plusieurs ouvertures d'alimentation (6), et une première unité d'alimentation (28) pour l'adhésif ainsi qu'une deuxième unité d'alimentation (31) pour l'agent moussant gazeux et une troisième unité d'alimentation (34) pour le diluant fluide étant prévues, chacune des unités d'alimentation (28, 31, 34) fournissant le composant respectif à la chambre de moussage (17) par l'intermédiaire d'au moins une ouverture d'alimentation (6), des moyens de réglage (25) étant prévus pour régler le rapport entre les composants individuels afin d'influencer les propriétés de la mousse adhésive.

2. Procédé selon la revendication 1, **caractérisé en ce que** l'on utilise un dispositif de production de mousse (1), dans lequel tous les composants de toutes les unités d'alimentation (28, 31, 34) sont fournis à la chambre de moussage (17) par la même ouverture d'alimentation (6).

3. Procédé selon la revendication 2, **caractérisé en ce que** l'on utilise un dispositif de production de mousse (1), dans lequel une conduite d'alimentation (26) débouche dans l'ouverture d'alimentation (6), chaque unité d'alimentation (28, 31, 34) étant reliée à la conduite d'alimentation (26) et débouchant dans la chambre de moussage (17) par le biais de la conduite d'alimentation (26).

4. Procédé selon la revendication 3, **caractérisé en ce que** l'on utilise un dispositif de production de mousse (1), dans lequel la deuxième et/ou la troisième unité d'alimentation (31, 34) sont reliées à la conduite d'alimentation (26) par un clapet anti-retour (23).

5. Procédé selon l'une des revendications 3 ou 4, **caractérisé en ce que** l'on utilise un dispositif de production de mousse (1), dans lequel la conduite d'alimentation (26) présente un clapet anti-retour (23) entre deux embouchures adjacentes de deux unités d'alimentation (28, 31, 34).

6. Procédé selon l'une des revendications précédentes, **caractérisé en ce que** l'on utilise un dispositif de production de mousse (1), dans lequel un dispositif de mesure (24) est prévu pour détecter le volume de l'adhésif fourni, et **en ce qu'**un moyen de réglage (25) est prévu pour régler le volume du diluant à fournir, une unité de commande (37) régulant le volume du diluant à fournir par l'intermédiaire du moyen de réglage (25), au moyen du volume fourni détecté de l'adhésif.

7. Procédé selon l'une des revendications précédentes, **caractérisé en ce que** l'on utilise un dispositif de production de mousse (1), dans lequel un dispositif de mesure (24) est prévu pour détecter les volumes de l'adhésif et du diluant fournis, et **en ce qu'**un moyen de réglage (25) est prévu pour régler le volume de l'agent moussant gazeux à fournir, une unité de commande (37) régulant le volume de l'agent moussant gazeux à fournir par l'intermédiaire du moyen de réglage (25), au moyen des volumes fournis détectés de l'adhésif et du diluant.

8. Procédé selon l'une des revendications 7 ou 8, **caractérisé en ce que** l'on utilise un dispositif de production de mousse (1), dans lequel le moyen de réglage (25) comprend une soupape réglable (25) et un dispositif de mesure (24) permettant de détecter le volume fourni du diluant et/ou de l'agent moussant gazeux.

9. Procédé selon l'une des revendications précédentes, **caractérisé en ce que** l'agent moussant gazeux est un mélange gazeux qui contient au moins partiellement de l'air, de l'azote, de l'oxygène, du dioxyde de carbone ou du carbone ou le mélange de l'un ou de plusieurs de ces gaz.

10. Procédé selon l'une des revendications précédentes, **caractérisé en ce que** l'agent moussant gazeux est un mélange gazeux qui contient au moins 5 % en volume d'oxygène par rapport au volume total du mélange gazeux.

11. Procédé selon l'une des revendications précédentes, **caractérisé en ce que** l'agent moussant gazeux est réglé à une température comprise entre 5 et 45 °C avant son acheminement.

12. Procédé selon l'une des revendications précédentes, **caractérisé en ce que** le diluant est réglé à une température comprise entre 10 et 45 °C avant son acheminement.

13. Procédé selon l'une des revendications précédentes, **caractérisé en ce que** l'on utilise un dispositif de production de mousse (1), dans lequel un réservoir tampon (3) est prévu comme réservoir de mousse, l'agent moussant gazeux et/ou le diluant étant fournis à la chambre de moussage (17) sous une pression supérieure à la pression prévalant dans le réservoir tampon (3).

14. Procédé selon la revendication 13, **caractérisé en ce que** l'agent moussant et/ou le diluant sont fournis à la chambre de moussage (17) à une pression supérieure de 0,5 bar à la pression prévalant dans le réservoir tampon (3).

15. Procédé selon l'une des revendications précédentes, **caractérisé en ce que** le diluant est constitué au moins en partie d'eau.
